# EUROPÄISCHE PATENTSCHRIFT

(11) **EP 0 628 747 B1**
(45) Veröffentlichungstag und Bekanntmachung des Hinweises auf die Patenterteilung: **09.04.1997**
(21) Anmeldenummer: 94107823.0
(22) Anmeldetag: 20.05.1994
(51) Int. Cl.: F16G 3/04

(54) **Verbindungselement für Förderbänder**
Fastening device for conveyor belts
Elément de liaison pour courroies de convoyeurs

(30) Priorität: 07.06.1993 DE 4318836
(43) Veröffentlichungstag der Anmeldung: 14.12.1994
(73) Patentinhaber: MATO Maschinen- und Metallwarenfabrik Curt Matthaei GmbH & Co KG, D-63071 Offenbach (DE)
(72) Erfinder: Herold, Wolfgang, D-63075 Offenbach-Bürgel (DE)
(74) Vertreter: Schieferdecker, Lutz, Dipl.-Ing.

(56) Entgegenhaltungen:
- DE-C- 612 221
- FR-A- 902 159
- FR-A- 950 177
- FR-A- 1 191 364
- FR-A- 2 116 609
- GB-A- 690 617
- GB-A- 2 170 292
- US-A- 3 990 343

## Beschreibung

Die Erfindung betrifft ein Verbindungselement für Förderbänder und insbesondere ein Verbindungselement mit einem im Querschnitt U-förmigen Grundkörper, der mindestens eine etwa halbkreisförmige Kupplungsöse und Halteschenkel mit Durchtrittsöffnungen für mindestens ein Befestigungsmittel aufweist.

Verbindungselemente der genannten Art sind bekannt und werden mit Hilfe eines ihre kämmenden Kupplungsösen durchgreifenden Kupplungsstabes miteinander verbunden. Sie umgreifen mit ihren U-förmigen Grundkörpern das jeweilige Förderbandende und werde in dieser Lage am Förderband zum Beispiel mit Hilfe von Krampen oder mit Hilfen von Nieten befestigt. Vor allem die Krampen stehen im zusammengebauten Zustand relativ weit über den Grundkörper des jeweiligen Verbindungselementes vor und grundsätzlich Gleiches gilt auch bei Verwendung von Nieten für deren Nietköpfe.

Sofern Nieten zum Befestigen der Verbindungselemente an den Gurtenden der Förderbänder benutzt werden, ist es darüber hinaus bekannt, relativ lange Nieten mit einer Spitze an ihrem freien Ende zu verwenden und diese nach dem Hindurchstecken durch das Gurtende und durch die Halteschenkel des Verbindungselementes auf die benötigte Länge zu kürzen. Dies bedeutet, daß alle Nieten nach dem Hindurchstecken einzeln abgeschnitten werden müssen. Der hiermit verbundene Arbeitsaufwand ist zeitraubend und somit teuer.

Auch aus der US 3-990-343 ist ein im Querschnitt U-förmiges Verbindungselement bekannt, das mit Nieten am Gurtende fixiert wird. Die Nieten weisen an ihrem einen Ende einen Kopf und an ihrem anderen, stumpfen Ende eine zylindrische Vertiefung für einen Stift mit einer Spitze auf. Der Stift wird nach dem Einschlagen des Niet entfernt. Er dient nur dazu, den Niet zu führen, wenn er von dem einen Schenkel her durch das Förderband bis in die Öffnung im zweiten Schenkel getrieben wird. Sobald er seine Position erreicht hat, wird der Stift aus dem Niet herausgezogen, so daß auch das zweite Ende des Nietes mit einem geeigneten Werkzeug einen zur endgültigen Befestigung dienenden Kopf erhalten kann. Dieser Kopf liegt dann fluchtend in der Kontur des U-förmigen Verbindungselementes, dessen Schenkel die gleiche Materialstärke aufweisen wie die Ösen.

Die Verwendung von Nieten mit später entfernbaren Hilfsspitzen ist außerordentlich aufwendig und daher teuer. Einerseits müssen die Nieten einen relativ großen Querschnitt besitzen, damit sie die Hilfsspitzen aufnehmen können. Auch der Querschnitt der in den Förderbandenden erzeugten Durchtrittsöffnungen ist entsprechend groß. Vor allem aber erhöht die zusätzliche Verwendung der Hilfsspitzen die Kosten beträchtlich, wobei dies sowohl für die Herstellung der Nieten als auch für ihre Handhabung gilt.

Schließlich ist aus der FR-A-950-177 ein im Querschnitt U-förmiges, zweiteiliges Verbindungselement für im Querschnitt trapezförmige Treibriemen bekannt. Der Treibriemen weist zwei in Längsrichtung laufende Stahlseile und ein diese verbindendes Geflecht auf. Zur Befestigung des Verbindungselementes an den Enden der Treibriemen dienen Stifte, die sich von dem einen Schenkel des Verbindungselementes durch den Treibriemen bis in den anderen Schenkel erstrecken. Der untere oder zweite Schenkel mit fluchtenden Öffnungen für die Stifte ist ein besonderes, im Querschnitt L-förmiges Teil, das mit seinem kurzen Schenkel in einem massiven Block des Verbindungselementes liegt und dort mit Hilfe von einer Schraube befestigt ist. Dieses Verbindungselement ist nicht nur wegen seiner konstruktiven Gestaltung außerordentlich aufwendig und daher mit hohen Herstellungskosten verbunden, sondern es eignet sich - wenn überhaupt - auch nur für Treibriemen und nicht zur Verwendung bei Förderbändern.

Gegenüber dem besagten Stand der Technik liegt der Erfindung die Aufgabe zugrunde, ein besonders flaches, hoch belastbares Verbindungselement mit den zugehörigen Befestigungsmitteln zu schaffen, wobei ferner das Anbringen bzw. Befestigen derartiger Verbindungselemente am Gurtende auch noch einfacher und weniger aufwendig ist als bisher.

Gelöst wird diese Aufgabe mit der Gesamtheit der Merkmale des Patentanspruches 1, wobei insbesondere die halbkreisförmige Kupplungsöse eine Materialstärke aufweist, die in radialer Richtung doppelt so groß ist wie die Materialstärke der Halteschenkel im Bereich ihrer Durchtrittsöffnungen für stiftförmige Befestigungsmittel mit flachen Stirnflächen an ihren stumpfen Enden. Beim Befestigen werden die flachen Enden der stiftförmigen Befestigungsmittel unmittelbar durch das Gurtende hindurchgedrückt, bis sie auf der anderen Seite des Gurtendes in die zugehörigen Öffnungen in den Halteschenkeln eintreten und dann unmittelbar verstemmt werden können. Dies geschieht mit Hilfe eines Dornes, der das stumpfe Ende des Befestigungsmittels geringfügig aufweitet, so daß es einen sicheren und festen Halt in der Öffnung bzw. Durchtrittsöffnung des Halteschenkels findet. Das derart gestaltete Verbindungselement ist hoch belastbar und läßt sich in zweckmäßiger und vorteilhafter Weise an dem Förderband befestigen.

Besonders gute Ergebnisse sind schließlich dann zu erzielen, wenn die stiftförmigen Befestigungsmittel aus einem hochfesten Werkstoff bestehen.

Weitere Merkmale der Erfindung gehen aus Unteransprüchen in Verbindung mit der Beschreibung und der Zeichnung hervor.

Die Erfindung wird nachstehend anhand eines Ausführungsbeispieles, das in der Zeichnung dargestellt ist, näher beschrieben. Dabei zeigen:
- Fig. 1:: einen Längsschnitt durch ein Verbindungselement vor dem Gebrauch;
- Fig. 2:: einen abgebrochenen Schnitt längs der Linie II - II in Fig. 3;
- Fig. 3:: eine Draufsicht auf ein Förderband mit mehreren Verbindungselementen;
- Fig. 4:: im Schnitt bzw. in Seitenansicht sowie in größerem Maßstab das Ende eines Förderbandes mit einem Verbindungselement vor dem Befestigen;
- Fig. 5:: im Schnitt eine Ansicht wie in Fig. 4 zusammen mit Teilen des Werkzeuges vor dem Hindurchstoßen des stiftförmigen Befestigungsmittels durch das Förderband;
- Fig. 6:: einen Schnitt wie in Fig. 5 unmittelbar vor dem Verpressen der Enden des Befestigungsmittels und
- Fig. 7:: im Schnitt bzw. Seitenansicht wie in den Fig. 4 - 6 das Ende des Förderbandes zusammen mit dem daran befestigten Verbindungselement.

Ein Verbindungselement 1 für Förderbänder 2 besteht aus einem im Querschnitt U-förmigen Grundkörper 3, der mindestens eine und vorzugsweise gemäß Ausführungsbeispiel 2 etwa halbkreisförmige Kupplungsösen 4 und zwei Halteschenkel 5 und 6 mit Öffnungen bzw. mit Durchtrittsöffnungen 7, 8 für Befestigungsmittel 9 aufweist.

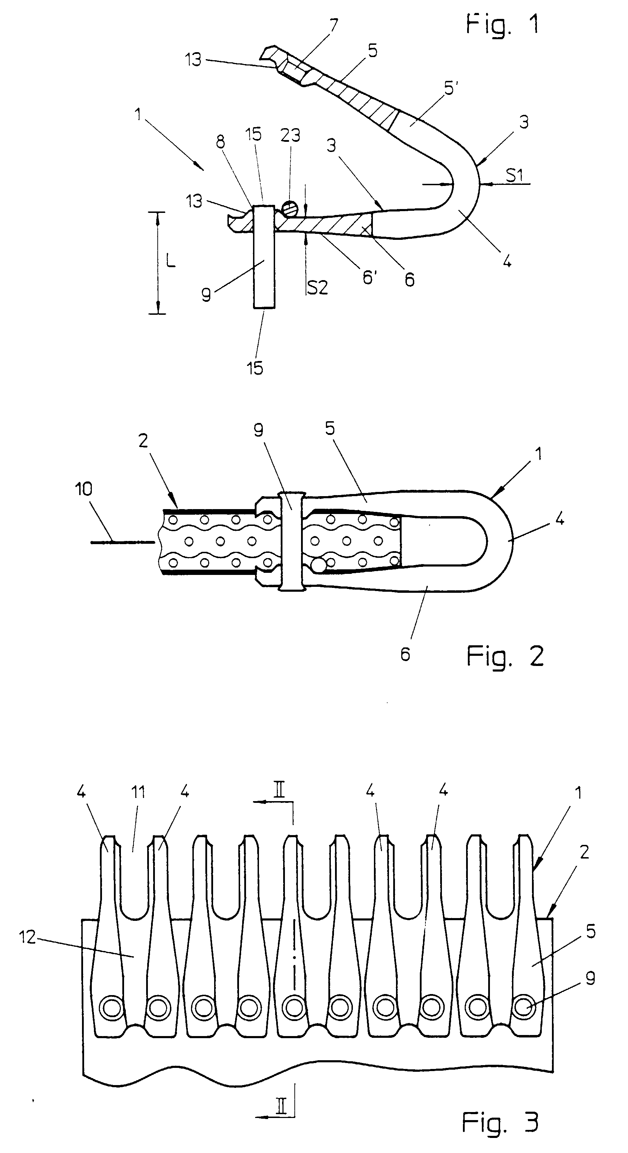

Die Kupplungsösen 4 weisen einen Vollquerschnitt auf. Die Materialstärke S₁ der Kupplungsösen 4 ist in radialer Richtung - mindestens über den größten Teil ihres Umfanges - wenigstens doppelt so groß wie die Materialstärke S₂ der Halteschenkel 5, 6 im Bereich ihrer Durchtrittsöffnungen 7, 8. Die Fig. 1 und 2 zeigen dies deutlich.

Aufgrund ihrer unterschiedlichen Materialstärke im Bereich der Kupplungsösen 4 und der Halteschenkel 5, 6 sind die Halteschenkel 5, 6 senkrecht zur Förderbandebene 10 im Querschnitt keilförmig. Um einen allmählichen Übergang von den Halteschenkeln 5, 6 in die Kupplungsösen 4 zu erzielen, divergiert der Querschnitt der Halteschenkel 5, 6 von den Durchtrittsöffnungen 7, 8 zu den Kupplungsösen 4 hin.

Wie die Fig. zeigen, bilden jeweils zwei Kupplungsösen 4 und die zugehörigen Halteschenkel 5, 6 in einstückiger Ausbildung ein Verbindungselement 1. Entsprechend der Lücke 11 zwischen den Kupplungsösen 4 weisen vorzugsweise beide Halteschenkel 5, 6 in Verlängerung der Lücke 11 liegende, allmählich auslaufende Vertiefungen 12 (Fig. 3) auf.

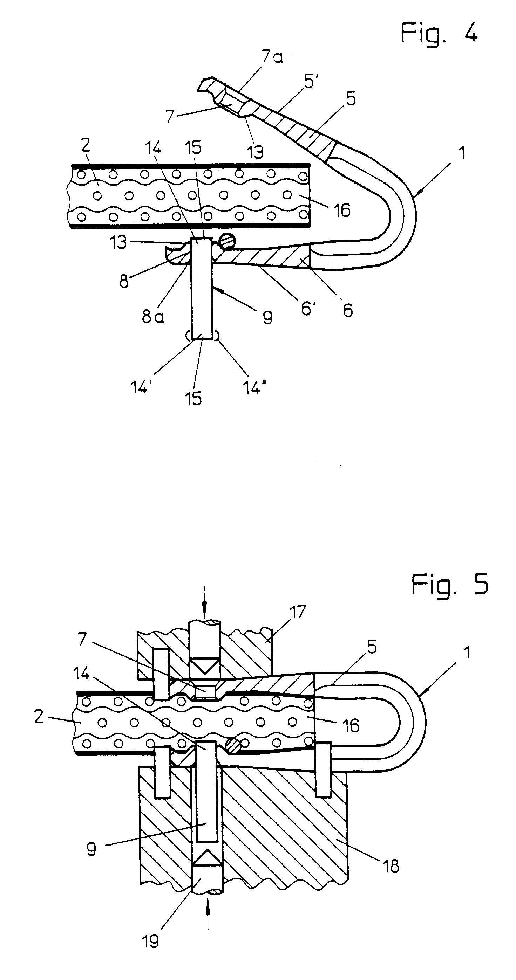

Ringwülste 13 umgeben jeweils förderbandseitig die trittsöffnungen 7, 8 (Fig. 1) und ferner weisen vorzugsweise die Durchtrittsöffnungen 7, 8 jeweils an den Außenseiten 5' bzw. 6' der Halteschenkel 5 bzw. 6 eine kegelstumpfförmige bzw. konische Vertiefung 7a bzw. 8a auf, wie Fig. 4 deutlich zeigt.

Die zum Befestigen des Verbindungselementes 1 am Förderband 2 dienenden Befestigungsmittel 9 sind stiftförmig, besitzen ein bereits vorgegebenes Endmaß (L) und weisen gemäß dem in den Fig. dargestellten Ausführungsbeispiel zwei stumpfe Ende 14 bzw. 14' auf. Gemäß der Erfindung ist mindestens eine Stirnfläche 15 am einen Ende 14 flach. Am anderen Ende 14' kann sich gegebenenfalls auch ein Nietkopf 14'' befinden. Vorteilhaft ist es jedoch, wenn beide Enden 14 und 14' mit flachen Stirnflächen 15 versehen sind, wie dies in den Figuren 1 und 4 dargestellt ist.

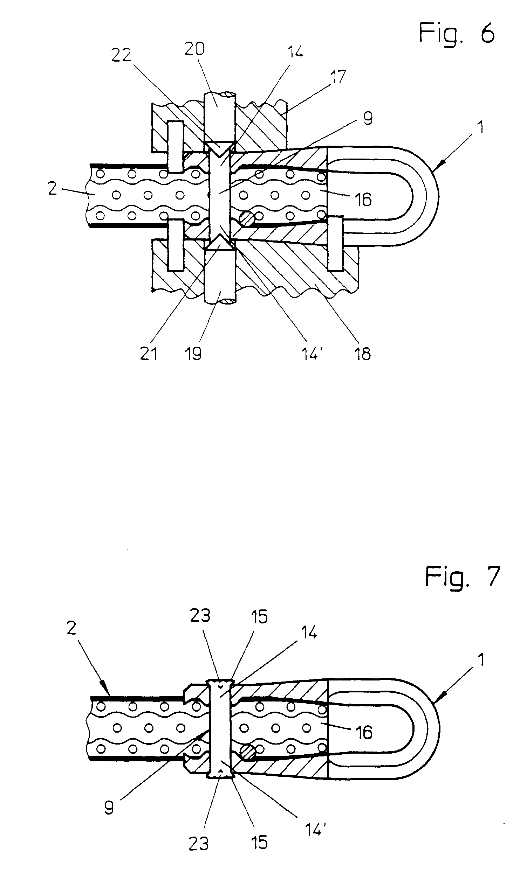

Die Befestigung des Verbindungselementes 1 am Gurtende 16 des Förderbandes 2 erfolgt mit Hilfe eines Oberwerkzeuges 17 und eines Unterwerkzeuges 18 gemäß den Figuren 5 und 6. Beim Befestigen drückt zunächst das Oberwerkzeug 17 den einen Halteschenkel 5 auf das Gurtende 16, bis die Durchtrittsöffnung 7 im Halteschenkel 5 mit dem stiftförmigen Befestigungsmittel 9 fluchtet, das in der Durchtrittsöffnung 8 des anderen Halteschenkels 6 positioniert ist. Daraufhin schiebt ein Dorn 19 im Unterwerkzeug 18 das stiftförmige Befestigungsmittel 9 durch das Förderband 2, bis sich sein voreilendes Ende 14 in der Durchtrittsöffnung 7 des anderen Halteschenkels 5 befindet. Auch das Oberwerkzeug 17 weist einen mit dem Dorn 19 im Unterwerkzeug 18 fluchtenden Dorn 20 auf. Beide Dorne 19 und 20 sind unabhängig voneinander bewegbar, wie die Pfeile in Fig. 5 deutlichen.

Sobald das Befestigungsmittel 9 in der vorgesehenen Weise durch das Förderband 2 hindurchgetreten ist, wirken die beiden Dorne 19 und 20 auf die stumpfen Enden 14 und 14' des Befestigungsmittels 9 ein und verstemmen bzw. verpressen die Enden 14 und 14' in den Durchtrittsöffnungen 7 und 8. Die Enden 14 und 14' füllen dabei auch die konischen Vertiefungen 7a bzw. 8a der Durchtrittsöffnungen 7 und 8 und sofern sich an den Enden der Dorne 19 und 20 jeweils eine Spitze 21 bzw. 22 befindet (Fig. 6), bilden diese entsprechende Vertiefungen 23 bzw. 24 in den Stirnflächen 15 des Befestigungsmittels 9.

In Abhängigkeit von der Länge des Befestigungsmittels 9 steht dieses nach dem Verstemmen bzw. Verpressen der Enden 14 und 14' entweder gar nicht über die Außenkontur des Verbindungselementes 1 vor, wie dies in Fig. 2 dargestellt ist, oder die Enden 14, 14' stehen etwas vor, wie Figur 7 zeigt. Ein möglicher Überstand beträgt vorzugsweise nicht mehr als maximal 0,2 mm.

Das Befestigungsmittel 9 weist gemäß Ausführungsbeispiel weder im Ausgangszustand noch nach Herstellung der Verbindung einen hochstehenden, herkömmlichen Nietkopf auf.

Wesentlich ist ferner, daß auch keine das Eindringen des Befestigungsmittls 9 in das Förderband 2 erleichternde Verjüngung oder Spitze vorgesehen ist.

Vorteilhaft ist es schließlich, wenn beide Enden des stiftförmigen Befestigungsmittels 9 stumpf sind, weil sich in diesem Fall eine besonderes einfache Herstellung und Verarbeitung anbietet, insbesondere wenn das Hindurchtreiben des Befestigungsmittels durch das Förderband bereits mit Hilfe des zum Aufspreizen dienenden, eine Spitze 21 aufweisenden Dornes 19 erfolgt.

Mehrere Verbindungselemente 1 werden schließlich zweckmäßigerweise zu einer Montageeinheit gemäß Fig. 3 mit Hilfe eines Drahtes 23 (Fig. 1) oder dergleichen zusammengefaßt, wie dies im übrigen grundsätzlich bekannt ist.

Die Erfindung ist nicht auch das in den Figuren dargestellte Ausführungsbeispiel beschränkt, vielmehr sind wandlungen möglich, ohne von dem grundsätzlichen dungsgedanken abzuweichen. So lassen sich zum Beispiel festigungsmittel 9 mit stumpfen Enden 14, 14' auch zum Befestigen von plattenförmigen Verbindungselementen an den Förderbändern verwenden und auch noch weitere Abweichungen hinsichtlich Form und Gestalt des bzw. der Verbindungselemente 1 und der Werkzeuge sind grundsätzlich denkbar. Wesentlich ist, daß das Befestigungsmittel 9 stumpfe Enden 14, 14' aufweist mit einem stumpfen Ende 14 durch das Gurtende 16 getrieben wir und daß das bzw. die stumpfen Enden 14, 14' in der oder den Durchtrittsöffnungen 7 bzw. 8 derart verpreßt werden, daß sie dort einen sicheren Halt finden. Der Durchmesser der Durchtrittsöffnung 7, in die das Ende 14 des Befestigungsmittels 9 jeweils eingefädelt werden muß, ist dabei etwa 0,1 mm größer als der Durchmesser der anderen Durchtrittsöffnung 8. Beim Verstemmen bzw. beim Verpressen erfolgt schließlich nur eine sehr geringe Vergrößerung des Außendurchmessers am jeweiligen Ende 14 bzw. 14' durch Aufspreizen bzw. Aufweiten unter Druck.

Das stiftförmige Befestigungsmittel besteht schließlich aus einem hochfesten Werkstoff.

## Patentansprüche

1. Verbindungselement für Förderbänder (2) mit einem im Querschnitt U-förmigen Grundkörper (3), der mindestens eine etwa halbkreisförmige Kupplungsöse (4) mit einer Materialstärke (S₁) aufweist, die in radialer Richtung doppelt so groß ist wie die Materialstärke (S₂) von Halteschenkeln (5, 6) im Bereich ihrer Durchtrittsöffnungen (7, 8), wobei sich die Halteschenkel (5, 6) keilförmig vom großen Querschnitt (S₁) der Kupplungsösen (4) zu dem geringeren Querschnitt (S₂) hin verjüngen, und wobei die Durchtrittsöffnungen (7, 8) jeweils an den Außenseiten (5', 6') der Halteschenkel (5, 6) jeweils konische Vertiefungen (7a, 8a) und jeweils förderbandseitig Ringwülste (13) aufweisen und wobei stiftförmige Befestigungsmittel (9) mit flachen Stirnflächen (15) an ihren stumpfen Enden (14) bzw. (14') vorgesehen sind und zum Verstemmen in den konischen Vertiefungen (7a, 8a) der Halteschenkel (5, 6) vorgesehen sind.

2. Verbindungselement nach Anspruch 1, dadurch gekennzeichnet, daß das stiftförmige Befestigungsmittel (9) eine auf Endmaß (L) geschnittene Länge aufweist.

3. Verbindungselement nach mindestens einem der vorhergehenden Ansprüche, dadurch gekennzeichnet, daß das Befestigungsmittel (9) aus einem hochfesten Werkstoff besteht.

4. Verbindungselement nach mindestens einem der vorhergehenden Ansprüche, dadurch gekennzeichnet, daß das eine stumpfe Ende (14') des Befestigungsmittels (9) ein Nietkopf (14") ist.

5. Verbindungselement nach mindestens einem der vorhergehenden Ansprüche, dadurch gekennzeichnet, daß der Durchmesser der Durchtrittsöffnung (7), in die das Ende (14) des Befestigungsmittels (9) beim Befestigen eintritt, etwa 0,1 mm größer ist als der Durchmesser der anderen Durchtrittsöffnung (8).

6. Verbindungselement nach mindestens einem der vorhergehenden Ansprüche, dadurch gekennzeichnet, daß jeweils zwei Kupplungsösen (4) und die zugehörigen Halteschenkel (5, 6) einstückig sind und daß vorzugsweise beide Halteschenkel (5, 6) in Verlängerung der Lücke (11) zwischen den Kupplungsösen (4) allmählich auslaufende Vertiefungen (12) aufweisen.

7. Verfahren zum Befestigen von Verbindungselementen nach Anspruch 1 und gegebenenfalls einem oder mehreren der Ansprüche 2 bis 6, dadurch gekennzeichnet, daß das stiftförmige Befestigungsmittel (9) mit seinem stumpfen Ende (14, 14') voran durch das Gurtende (16) gedrückt wird und daß sodann das stumpfe, vorlaufende Ende (14) und gegebenenfalls auch das zweite, stumpfe Ende (14') durch Druck und Verformung verstemmt bzw. verankert werden.

8. Verfahren nach einem oder mehreren der vorhergehenden Ansprüche, dadurch gekennzeichnet, daß das bzw. die stumpfen Enden (14, 14') mit Hilfe von mindestens einem, eine Spitze (21, 22) aufweisenden Dorn (19, 20) aufgespreizt werden.

## Claims

1. A connecting element for conveyor belts (2) comprising a main body (3) which is U-shaped in cross-section and which has at least one approximately semicircular coupling eye (4) with a material thickness (S₁) which in the radial direction is twice as large as the material thickness (S₂) of holding limbs (5, 6) in the region of their through openings (7, 8), wherein the holding limbs (5, 6) taper in a wedge-like configuration from the large cross-section (S1) of the coupling eyes (4) towards the smaller cross-section (S₂), and wherein the through openings (7, 8) each have at the outsides (5', 6') of the holding limbs (5, 6) respective conical recesses (7a, 8a) and respective annular ridges (13) at the conveyor belt side, and wherein there are provided pin-shaped fixing means (9) with flat end faces (15) at their blunt ends (14) and (14') respectively and are intended for peening over in the conical recesses (7a, 8a) of the holding limbs (5, 6).

2. A connecting element according to claim 1 characterised in that the pin-shaped fixing means (9) is of a length which is cut to a final dimension (L).

3. A connecting element according to at least one of the preceding claims characterised in that the fixing means (9) comprises a high-strength material.

4. A connecting element according to at least one of the preceding claims characterised in that the one blunt end (14') of the fixing means (9) is a rivet head (14").

5. A connecting element according to at least one of the preceding claims characterised in that the diameter of the through opening (7) into which the end (14) of the fixing means (9) passes in the fixing operation is about 0.1 mm larger than the diameter of the other through opening (8).

6. A connecting element according to at least one of the preceding claims characterised in that each two coupling eyes (4) and the associated holding limbs (5, 6) are integral and that preferably both holding limbs (5, 6) have recesses (12) which gradually taper off as a prolongation of the gap (11) between the coupling eyes (4).

7. A method of fixing connecting elements according to claim 1 and possibly one or more of claims 2 to 6 characterised in that the pin-shaped fixing means (9) is pressed with its blunt end (14, 14') leading through the belt end (16) and that the blunt leading end (14) and possibly also the second blunt end (14') are then peened-over or anchored by pressure and deformation.

8. A method according to one or more of the preceding claims characterised in that the blunt end or ends (14, 14') are spread open by means of at least one bar (19, 20) having a point (21, 22).

## Revendications

1. Elément de liaison pour bandes de convoyeur (2), comprenant un corps de base (3), dont la section transversale est en forme de U et qui présente au moins un oeillet d'accouplement (4) approximativement en forme de demi-cercle, dont l'épaisseur de matériau (S₁) qui, dans le sens radial, représente le double de l'épaisseur de matériau (S₂) des pattes de retenue (5, 6), dans la zone de leurs ouvertures de passage (7, 8), les pattes de retenue (5, 6) se rétrécissant de manière cunéiforme depuis la section transversale (S₁) de grande dimension des oeillets d'accouplement (4) en direction de la section transversale de plus petite dimension (S₂), et les ouvertures de passage (7, 8) présentant, sur leurs faces externes (5', 6') des pattes de retenue (5, 6), respectivement des cavités coniques (7a, 8a) et respectivement, du côté de la bande de convoyeur, des bourrelets annulaires (13), et des moyens de fixation (9), en forme de broche, avec leurs surfaces avant plates (15) étant prévus à leurs extrémités tronquées (14) respectivement (14') en vue du matage dans les cavités coniques (7a, 8a) des pattes de retenue (5, 6).

2. Elément de liaison selon la revendication 1, caractérisé en ce que le moyen de fixation (9), en forme de broche, présente une longueur coupée à la cote finale (L).

3. Elément de liaison selon l'une des revendications précédentes, caractérisé en ce que le moyen de fixation (9) se compose d'un matériau hautement résistant.

4. Elément de liaison selon l'une des revendications précédentes, caractérisé en ce que l'une des extrémités tronquées (14') du moyen de fixation (9) est une tête de rivet (14").

5. Elément de liaison selon l'une des revendications précédentes, caractérisé en ce que le diamètre de l'ouverture de sortie (7), dans laquelle s'engage l'extrémité (14) du moyen de fixation (9) au moment de la fixation, est supérieur d'approximativement 0,1 mm au diamètre de l'autre ouverture de passage (8).

6. Elément de liaison selon l'une des revendications précédentes, caractérisé en ce que respectivement deux oeillets d'accouplement (4) et les pattes de retenue respectives (5, 6) sont d'une seule pièce et en ce que de préférence, les deux pattes de retenue (5, 6) présentent des cavités (12) se rétrécissant progressivement dans le prolongement des vides (11) entre les oeillets d'accouplement (4).

7. Procédé pour la fixation d'éléments de liaison selon la revendication 1 et éventuellement selon une ou plusieurs des revendications 2 à 6, caractérisé en ce que le moyen de fixation (9), en forme de broche, est comprimé, par son extrémité tronquée (14, 14') vers l'avant à travers l'extrémité de courroie (16) et en ce qu'ainsi, l'extrémité tronquée (14), qui est en avant, et éventuellement aussi la seconde extrémité tronquée (14') peuvent être matées respectivement ancrées par pression et déformation.

8. Procédé selon une ou plusieurs des revendications précédentes, caractérisé en ce que l'extrémité respectivement les extrémités (14, 14') sont écartées à l'aide d'au moins un poinçon (19, 20) présentant une pointe (21, 22).
